# EUROPEAN PATENT APPLICATION

(11) **EP 0 862 014 A1**
(43) Date of publication of application: **02.09.1998**
(21) Application number: 98301497.8
(22) Date of filing: 02.03.1998
(51) Int. Cl.: F16M 11/12, F16M 11/04

(54) **Support apparatus**

(30) Priority: 28.02.1997 GB 9704169
(71) Applicant: HAROPA PRODUCTS LIMITED, Darlaston, West Midlands WS10 7TG (GB)
(72) Inventor: Brodmann, Harry, Wolverhampton, West Midlands WW4 5DU (GB)
(74) Representative: Swindell & Pearson

(57) **Abstract**

A support apparatus primarily for wall-mounting a television receiver or the like includes a joint which allows the television to be adjusted about a vertical or horizontal axis. A pin 34 defines a vertical axis around which limbs 28c,32 can turn relative to each. A horizontal axis is provided between ears 40,42 and the position is set by a set screw 46 adjusted by a thumb wheel 52.

## Description

The present invention relates to support apparatus, especially but not exclusively to support apparatus for wall-mounting television sets and the like.

It has become increasingly common to wall-mount electrical equipment such as television sets, loudspeakers and the like, both in commercial situations and domestically. This avoids the need for floor-standing furniture and can thus save space. For convenience and comfort during use, it is desirable for the position of the equipment to be adjustable at least to some degree during use but the great weight of some of this equipment, particularly television sets, makes it difficult to provide easy adjustment which is also adequately safe.

The present invention seeks to provide an improved apparatus for these and other applications.

According to the invention, there is provided support apparatus comprising a first part which, in use, is attached to a fixed structure to provide a mounting for the support assembly, and a second part on which, in use, an article may stand, and wherein the first and second parts are connected by joint means which allow the second part to be re-oriented relative to the first part about axes which are substantially perpendicular.

Preferably the axes are substantially horizontal and substantially vertical in use. The second part may comprise a platform.

The joint means preferably comprise a joint body connected to the first part to allow relative re-orientation about a first of the said axes, and connected to the second part to allow relative re-orientation about the second of the said axes. The joint body may be attached to the first part to be pivotable about the substantially vertical axis. A hinge pin is preferably provided, by which the joint body is attached to the first part.

The joint body may be attached to the second part to be pivotable about the substantially horizontal axis. Preferably hinge means are provided between the joint body and the second part. There may be setting means operable to set the position of the joint body relative to the first or second part.

The setting means is preferably associated with the substantially horizontal axis. The setting means may comprise a member which bears on the joint body and the second part, and which is movable relative to the joint body or the said part, to cause the relative positions to change. The threaded member is preferably movable up and down to cause the second part to tilt. The weight of the second part may be supported, at least in part, by resting on the said member. The said member is preferably pivotally connected with the second part and may be threadedly connected to the joint body or the said part.

There may be manually operable means for turning the setting means member. The manually operable means may comprise a thumb wheel carried by the setting means member. The thumb wheel may threadedly engage the setting means member, and be held captive by the joint body, whereby turning the thumb wheel causes the setting means member to move axially relative to the joint body.

One example of an arrangement according to the present invention will now be described in more detail, by way of example only, and with reference to the accompanying drawings, in which:
Fig. 1 is a general, part schematic side elevation of support apparatus according to the present invention; and
Figs. 2, 3 and 4 show, on an enlarged scale, base, vertical section and front views of the joint arrangement of the apparatus of Fig. 1.

The drawings show support apparatus 10 intended primarily for wall-mounting a television receiver or the like (not shown). The apparatus 10 comprises a first part in the form of an arm 12 which, in use, is attached to a fixed structure such as a wall at 14. This provides a mounting for the support apparatus 10. The apparatus 10 also has a second part in the form of a platform 16 on which, in use, an article such as a television receiver may stand. The arm 12 and platform 16 are connected by a joint arrangement indicated generally at 18 which allows the platform 16 to be re-oriented relative to the arm 12 about axes which are substantially perpendicular, as will be described.

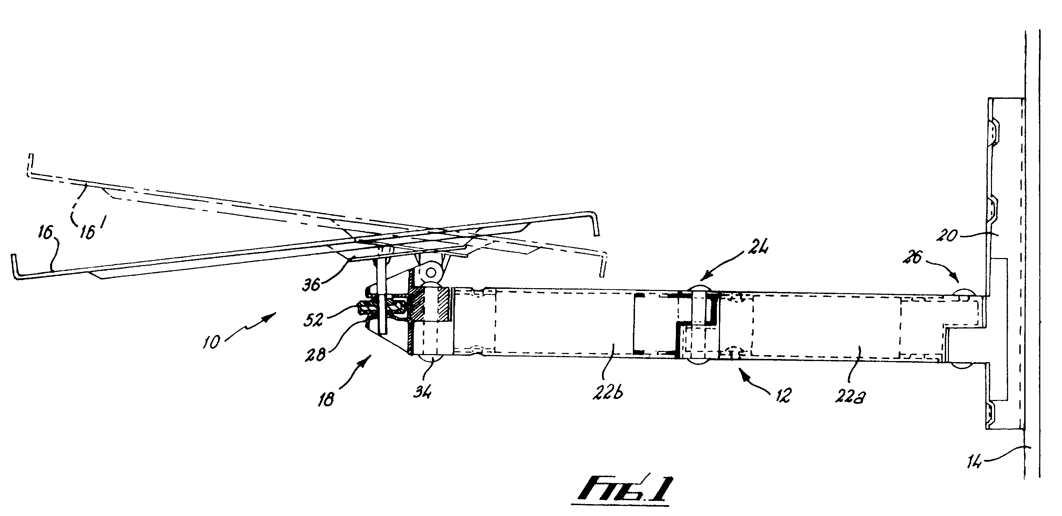

In more detail, the arm 12 includes a wall bracket 20 for permanent screw fixing to the wall 14, and two beams 22a,b, connected end to end by a vertical hinge at 24. The beam 22a is attached to the bracket 20 by a vertical hinge at 26. The joint 18 is provided at the end of the beam 22b remote from the wall 14. The platform 16 is carried above the beam 22b by the joint 18 to be described in more detail below. The platform 16 can tilt about a generally horizontal axis, for instance between the two positions labelled 16,16' in Fig. 1, and can also swing about a vertical axis. This range of movement allows a television set to be moved to a comfortable viewing position in a wide variety of installation conditions.

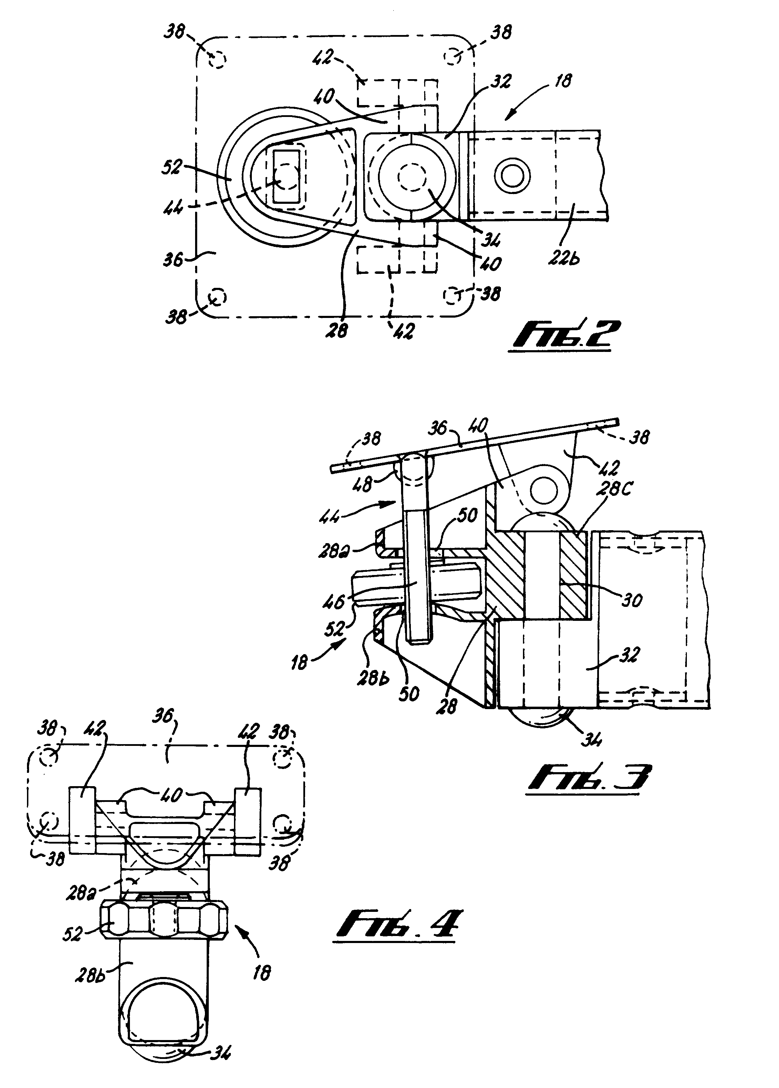

The joint 18 is shown in more detail in Figs. 2, 3 and 4. The joint 18 is based around a joint body 28 which, when seen in vertical section as in Fig. 3, has three main limbs 28a,b,c.

The limb 28c has a vertical open bore 30 and sits on a similar limb 32 formed at the end of the beam 22b and which also has a vertical open-ended bore. A hinge pin 34 connects the limbs 28c,32 to provide hinged movement therebetween, about a substantially vertical axis.

The other two limbs 28a,b form part of the connection between the body 28 and the platform 16. In this example, the joint 18 includes a plate 36 to which the platform 16 can be attached, for instance by screws through mounting holes 38, but it will be appreciated from the following description that the arrangement could readily be modified to attach directly to the platform 16, rather than through the intermediary of a plate 36. Thus, description of the mounting of the plate 36 and its movement can readily be interpreted in relation to the alternative of direct mounting to the platform 16.

A hinge connection is provided between the plate 36 and the body 28 by two ears 40 on the body 28, and corresponding ears 42 depending from the plate 36. The ears 40 are positioned slightly above and slightly to either side of the limb 28c. The ears 42 are located to either side of the ears 40 and appropriate pivot pins, axially aligned with each other, connect each pair of ears 40,42 together to provide hinged movement between the plate 36 and the body 28 about a substantially horizontal axis.

The apparatus 10 also provides an arrangement for setting the tilt of the plate 36 about the horizontal hinge axis just described. For this purpose, a threaded bar 44 is provided with a T-shaped top and a downwardly extending limb 46. The T-shaped top provides pivotal connection between the bar 44 and the plate 36 by locating in eyes 48. This allows the limb 46 to turn in the ears 40,42 to remain generally upright as the plate 36 rocks up and down, and prevents the limb 46 turning about a vertical axis.

The limb 46 is a loose fit through oversize openings 50 in the limbs 28a,b. A thumb wheel 52 is threaded onto the limb 46 and located between the limbs 28a,b. The thumb wheel 52 is sufficiently large to be readily accessible by hand from outside the body 28, and consequently is larger than the openings 50 and thus held captive between the limbs 28a,b.

In use, the thumb wheel 52 can be turned by hand. Since the bar 44 cannot turn by virtue of its engagement with the eyes 48, this rotation of the thumb wheel 52 causes the bar 44 to rise or fall by virtue of the threaded engagement. As the bar 44 rises, it pushes the front of the plate 36 up, tilting the plate 36 backwards. If the thumb wheel 52 is turned in the opposite direction, causing the bar 44 to move down, the front of the plate 36 is allowed to fall, tilting the plate 36 forward. It can be seen from Fig. 3 particularly, that part of the weight of the equipment supported by the apparatus will be borne from the platform 16 through the bar 44 and thumb wheel 52 to the limb 28b.

The equipment supported on the apparatus 10 can also be turned about a vertical axis by gripping an appropriate part of the platform 16 and turning, to turn the body 28 about the hinge at 34.

Thus, the equipment supported on the apparatus can be adjusted about two perpendicular axes. In addition, the apparatus described allows further adjustment of the position and orientation by virtue of the hinges 24,26.

Since the hinge pin 34 is vertical, the weight of the equipment supported by the apparatus will tend to hold the position to which the platform has been moved around the vertical axis and thus, no setting or locking arrangement is considered necessary for the hinge at 34.

Many variations and modifications can be made to the apparatus described above, without departing from the scope of the invention. In particular, many of the components described above are envisaged to be manufactured in metal, but could be made in other materials, such as appropriately strong synthetic plastics materials. In particular, the body 28 may be formed more easily by a mouldable material. The relative sizes of the components can be changed according to the aesthetics and strength required. It is not necessary to provide hinges along the length of the beams 22. An arrangement with no other articulation than that provided by the body 28 would nevertheless allow considerable freedom to re-orient equipment supported by the apparatus.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Support apparatus comprising a first part which, in use, is attached to a fixed structure to provide a mounting for the support assembly, and a second part on which, in use, an article may stand, and wherein the first and second parts are connected by joint means which allow the second part to be re-oriented relative to the first part about axes which are substantially perpendicular.

2. Apparatus according to claim 1, wherein the axes are substantially horizontal and substantially vertical, in use.

3. Apparatus according to claim 1 or 2, wherein the second part comprises a platform.

4. Apparatus according to any preceding claim, wherein the joint means comprise a joint body connected to the first part to allow relative re-orientation about a first of the said axes, and connected to the second part to allow relative re-orientation about the second of the said axes.

5. Apparatus according to claim 4, wherein the joint body is attached to the first part to be pivotable about a substantially vertical axis.

6. Apparatus according to claim 5, wherein a hinge pin is provided, by which the joint body is attached to the first part.

7. Apparatus according to any of claims 4 to 6, wherein the joint body is attached to the second part to be pivotable about a substantially horizontal axis.

8. Apparatus according to claim 7, wherein hinge means are provided between the joint body and the second part.

9. Apparatus according to any of claims 4 to 8, wherein setting means are operable to set the position of the joint body relative to the first or second part.

10. Apparatus according to claim 9, wherein the setting means is associated with a substantially horizontal axis.

11. Apparatus according to claim 10, wherein the setting means comprise a member which bears on the joint body and the second part, and which is movable relative to the joint body or the said part, to cause the relative positions to change.

12. Apparatus according to claim 11, wherein the setting means member is movable up and down to cause the second part to tilt.

13. Apparatus according to claim 11 or 12, wherein the weight of the second part is supported, at least in part, by resting on the said member.

14. Apparatus according to claim 11, 12 or 13, wherein the said member is pivotally connected with the second part.

15. Apparatus according to any of claims 11 to 14, wherein the said member is threadedly connected to the joint body or the said part.

16. Apparatus according to claim 15, comprising manually operable means for turning the setting means member.

17. Apparatus according to claim 16, wherein the manually operable means comprise a thumb wheel carried by the setting means member.

18. Apparatus according to claim 17, wherein the thumb wheel threadedly engages the setting means member, and is held captive by the joint body, whereby turning the thumb wheel causes the setting means member to move axially relative to the joint body.

19. Any novel subject matter or combination including novel subject matter disclosed herein, whether or not within the scope of or relating to the same invention as any of the preceding claims.
